Europäisches Patentamt

European Patent Office

Office européen des brevets

(11) Publication number: 0 226 405 A2

# EUROPEAN PATENT APPLICATION

(21) Application number: 86309471.0

(22) Date of filing: 04.12.86

(51) Int. Cl.⁴: **B01D 19/00**

(30) Priority: 05.12.85 US 804831

(43) Date of publication of application:
24.06.87 Bulletin 87/26

(84) Designated Contracting States:
BE CH DE FR GB IT LI LU NL SE

(71) Applicant: GILBARCO INC.
7300 West Friendly Avenue P.O. Box 22087
Greensboro North Carolina 27420(US)

(72) Inventor: Millikan, Joseph Benjamin
Route 2, Box 198
Sophia, North Carolina(US)

(74) Representative: Mitchell, Alan et al
ESSO Engineering (Europe) Ltd. Patents &
Licences Apex Tower High Street
New Malden Surrey KT3 4DJ(GB)

(54) Separating air from liquid fuel.

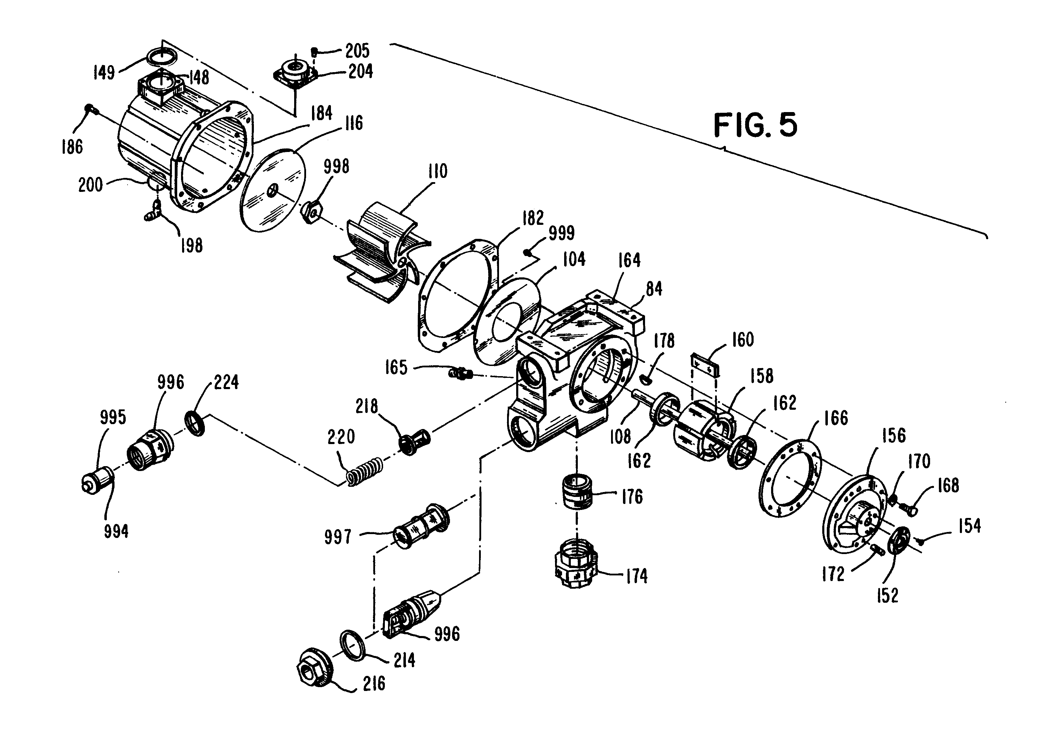

(57) For pumping liquid fuel substantially free of air
from a storage tank to a nozzle (68), a vane pump -
(84) and centrifugal separator (86) are used which
are bolted together and share a common drive shaft
(108), whereby fuel is pumped from the vane pump -
(84) into a central portion (103) of the centrifuge -
(86) in parallel with the longitudinal axis of a curved
multibladed impeller (Fig. 4) of the centrifuge while
the impeller is rotating, whereafter the rotating impel-
ler creates centrifugal forces to cause air to be
extracted from the fuel, the air being directed rear-
wardly along the axis of the impeller for delivery to a
vent port (118) and the fuel substantially free of air
being driven against the inside wall of the centrifuge
and delivered to a fuel outlet port (148). A sump -
(89) is connected to the vent port (118) of the
centrifugal separator (86) for receiving a rarefied
air/fuel mixture therefrom for completing the separa-
tion of air from the fuel.

FIG. 3B

## SEPARATING AIR FROM LIQUID FUEL

This invention relates to systems for pumping fuel, and more particularly to' such systems which provide for the separation of air from the fuel before the fuel is pumped through a meter for measuring the amount of fuel delivered to a receiving tank.

Systems for delivering fuel from a storage tank to a receiving tank typically include a pump for pumping the fuel from the storage tank, through a feed line and meter, to a nozzle for delivery to a receiving tank such as the fuel tank of a vehicle. The meter measures the fuel delivered to the receiving tank for calculation of the cost of the fuel delivered. If the fuel being pumped includes air, the typical fuel meter will measure both the amount of fuel and air passing through the meter, causing a customer to be overcharged for the amount of fuel by a factor equivalent to the percentage of air in the fuel. Most countries set standards for the air/fuel ratio permitted for calculation of the price to be charged. Typical European weights and measures standards require that the total error caused by air in the fuel being distributed cannot exceed 1.0 percent for diesel fuel, and 0.5 percent for gasoline. Australian requirements are stringent, setting a standard maximum error of 0.5 percent due to air in measuring the amount of fuel being delivered to a user.

One known fuel pumping or distribution system includes a passive type air separation system. In that system, the fuel/air mixture is delivered from a pump to an air separator housing, in which air floats to the top of the housing via the bouyant force acting on bubbles formed in the fuel and the air is exited through a vent tube to a sump system. The internal pressure in the sump is at atmospheric pressure, whereas the pressure in the air separator is at a pump discharge pressure (ranges from 20 to 40 psi). The air, being less dense than the fuel, flows towards the zone of lowest pressure. Passive systems are effective for fuel pumping or delivery systems having air flow rates of less than 5 percent of total flow rate. However, such passive systems cannot handle air flow rates of 100 percent of total flow rate mandated by weights and measures requirements of many countries.

According to the invention from one aspect there is provided apparatus for both pumping liquid fuel and removing air from thefuel, comprising a pump for pumping the fuel, the pump having a drive shaft and a rotor rigidly mounted thereon, and an air separator for removing air from the fuel delivered by the pump, characterised in that the air separator comprises a centrifuge having a centrifuge chamber and an impeller therein rigidly mounted upon an extension of the pump drive shaft for centrifuging the fuel delivered by the pump so that it separates into fuel substantially free of air in a first region of said centrifuge chamber radially remote from said shaft extension and air-containing fuel in a second region of said centrifuge chamber radially adjacent to said shaft extension, said centrifuge further comprising respective outlet means in liquid communication with the substantially air-free fuel and the air-containing fuel in said first and second regions, respectively.

According to the invention from another aspect there is provided a method of separating air from liquid fuel, comprising the steps of pumping the fuel in a pump to deliver the fueld under increased pressure and separating air from the delivered fuel, characterised in that the air separation is effected by centrifuging the delivered fuel in a centrifuge chamber so that the delivered fuel separates into fuel substantially free of air in a first region of the centrifuge chamber radially remote from the axis of centrifugation and air-containing fuel in a second region of said centrifuge chamber radially adjacent to said axis of centrifugation, and by separating discharging substantially air-free fuel and air-containing fuel from said first and second regions, respectively.

It will be appreciated that the invention may be put into effect to provide an improved system for separating air from fuel in a fuel pumping system. Furthermore, a dynamic system is provided for separating air from fuel and a new sump system is provided for the final stage of a system for separating air from fuel.

A preferred embodiment of the invention provides a centrifugal air separator directly driven by a modified fuel pumping unit, for delivering fuel substantially free of air to a meter, and delivering a light mixture of air and fuel to a sump for completing separation of the air from the fuel, whereby the extracted air is vented to the atmosphere. An improved sump is also provided including both inlet manifold means for distributing light fuel containing air onto the walls of the sump for permitting the air in the fuel to dissipate, and two-stage valving means for substantially eliminating fuel overflow from the sump when a large amount of fuel is present within the sump.

The invention will be better understood by referring, by way of example, to the accompanying drawings wherein like elements are shown by the same reference number and wherein:

Fig. 1 is a block diagram of a typical prior fuel distribution system;

Figs. 2A and 2B are cutaway views of a prior fuel pumping system;

Figs. 3A and 3B are cutaway views of the fuel pumping or distribution system of a preferred embodiment of the present invention;

Fig. 4 is a sectional view taken along A-A of the centrifugal air separator of Fig.3B;

Fig. 5 is an exploded pictorial assembly diagram of the pump and air separator unit of a preferred embodiment of the present invention;

Fig. 6 is a layout diagram useful in designing the impeller of a preferred air separator unit;

Fig. 7 is a pictorial exploded assembly view of a preferred sump unit or system;

Fig. 8 is a cutaway view showing a "first stage of operation" of the two-stage valve mechanism of the sump system of Figure 7;

Fig. 9 is a sectional view taken along B-B of Fig. 8;

Fig. 10 is a cutaway view of a "second stage of operation" of the two-stage valving system of the sump unit of Fig. 7; and

Fig. 11 is a view taken along section C-C a cutaway view of the valving system shown in Fig. 10.

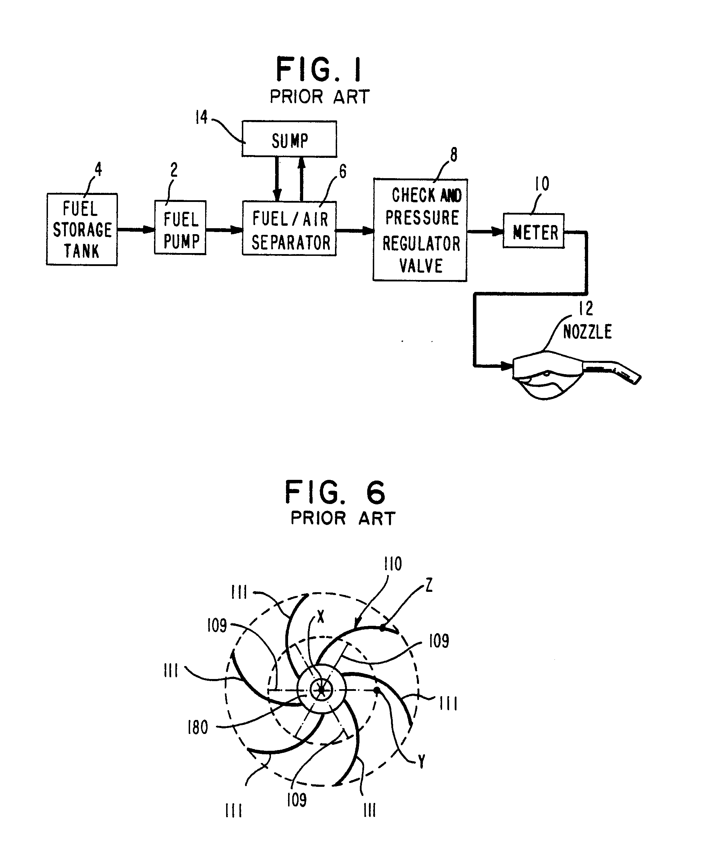

With reference to Fig. 1, a typical prior fuel pumping or distribution system includes a fuel pump 2 for pumping fuel from a fuel storage tank 4 under pressure to a fuel/air separator 6. The fuel/air separator 6 operates to separate air from the fuel, and deliver fuel of lesser air content through a check and pressure regulator valve 8 and meter 10 to a nozzle 12 for distribution to a user's fuel tank. Air and tank fuel (fuel having a very high percentage of air) is delivered from the fuel/air separator 6 to a sump 14. The check valve and pressure regulator 8 prevents fuel from draining from the system when the pump is shut off, prevents the meter from turning backwards, and prevents pressure build-up from thermal expansion. the sump 14 operates to further separate air from the fuel, to vent the air from the pumping system, and to deliver rarefied fuel back to the fuel/air separator 6 for further processing.

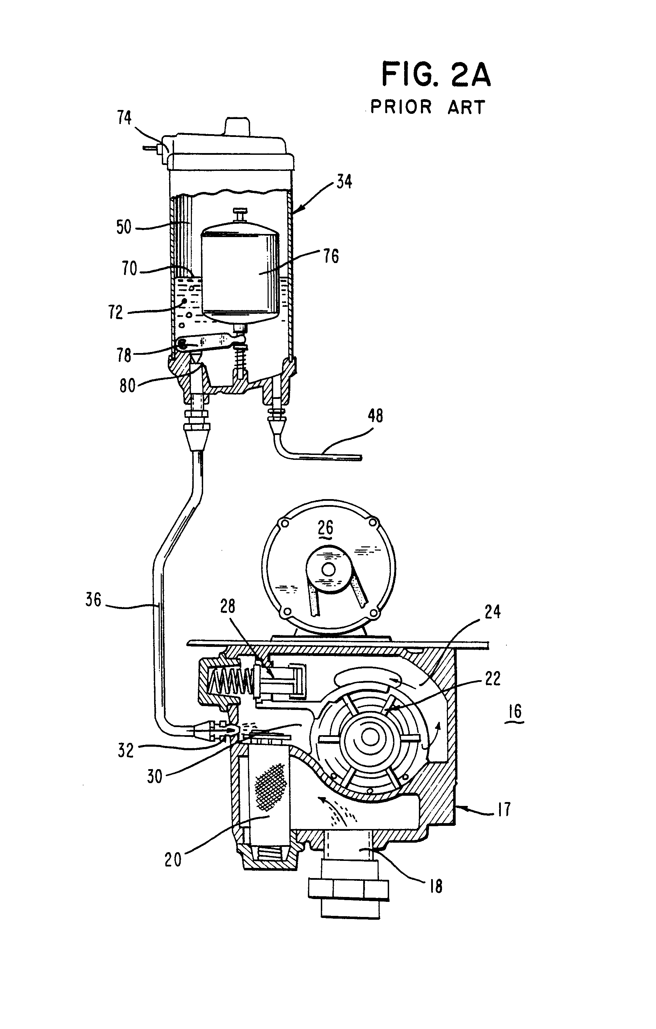

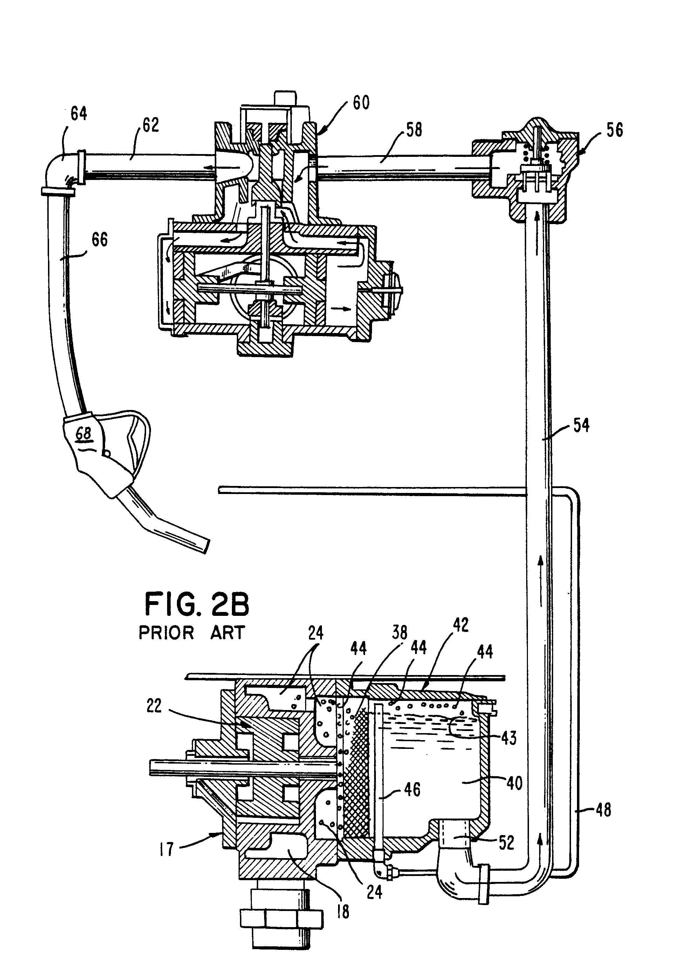

A partial cutaway view of a prior pumping system developed and manufactured by the assignee of the present invention is shown in Figs. 2A and 2B. Generally speaking, the front view of the prior pump/air separator unit 16 (see Fig. 2A) includes an entry port 18 for sucking fuel from a storage tank through a check valve and/or strainer unit 20 to a rotor 22 of the pump 17 for delivery under pressure into an outlet chamber 24. An electric motor 26 is included to drive the pump rotor 22. Also, a by-pass valve assembly 28 is included to permit fuel under excess pressure to be returned from the outlet chamber 24 back to the inlet port 30 of the rotor 22. A sump return port 32 is provided for receiving excess fuel from a sump unit 34 for return via tubing 36 to the rotor inlet port 30 or inlet chamber of the pump/air separator 16. As shown in the side view (see Fig. 2B) of the pump/air separator 16, the outlet chamber 24 of the pump 17 is connected to a separator filter 38 of the air separator for pumping fuel through the separator filter 38 into the chamber 40 of the air separator 42. The air separator 42 is a passive type of separator, whereby air is separated from the fuel 43 within the chamber 40 of the air separator 42 by permitting a natural flow of air bubbles 44 formed within the fuel 43 to move the bubbles 44 upward to the top portion of the chamber 40 where the air and some fuel is exhausted from the chamber into a sump feed line 46 for delivery via tubing 48 to the chamber 50 of the sump system 34. Fuel of substantially lower air content is delivered from a discharge port 52 of the air separator 42 by a fuel feed line 54 to a check valve and pressure regulator assembly 56, and therefrom via another feed line 58 to a meter assembly 60. The fuel flows from the meter assembly 60 via the fuel feed line 62 to a coupling 64 for connection to a fuel hose 66 for delivery to a nozzle 68, as shown. The check valve and pressure regulator 56 can be provided for one range of pressure by a PA0054 pressure regulator valve, manufactured by Gilbarco, Inc., Greensboro, North Carolina, U.S.A., for example. The meter 60 can be provided by a PA024 meter also manufactured by the Gilbarco, Inc., for example. Fuel 70 of relatively high air content delivered to the sump 34 along with air discharged from the air separator 42 is partially purged of air by the action of air bubbles 72 floating to the surface of the fuel 70 in the sump 34 being dissipated from the fuel 70 and exited through an air vent 74. When more than a predetermined amount of liquid fuel 70 accumulates in the sump 34, a float 76 rises upward lifting a needle valve 78 from its seat 80, for permitting fuel 70 to flow from the sump 34 via the sump return line 36 to the pump 17 for reprocessing. Note that in the air separator 42, a separator filter 38 consisting of screen-like material is provided to assist in separating air from the fuel by forcing air bubbles 44 to float to the top of the fuel 43 in the air separator fuel chamber 40. Experience has shown that this prior system is capable of delivering fuel substantially free of air provided that the air flow rates involved in initiating the pumping of the fuel are less than five percent of the total flow rate of the air and fuel. Note that although various tubing and pipe fittings are shown in the drawings for completeness, such standard hardware is not particularly described herein.

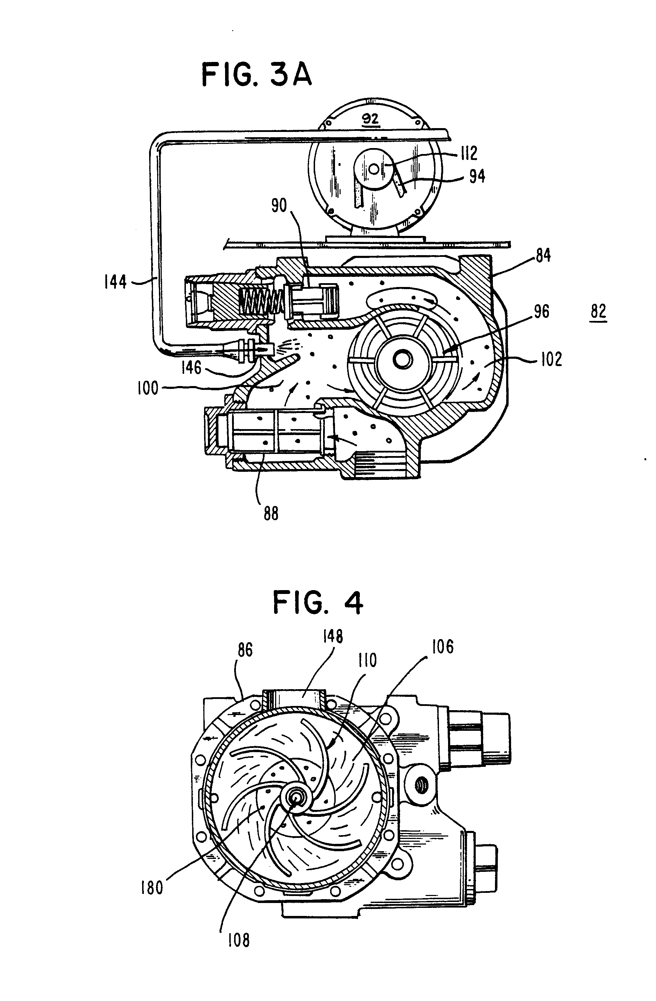

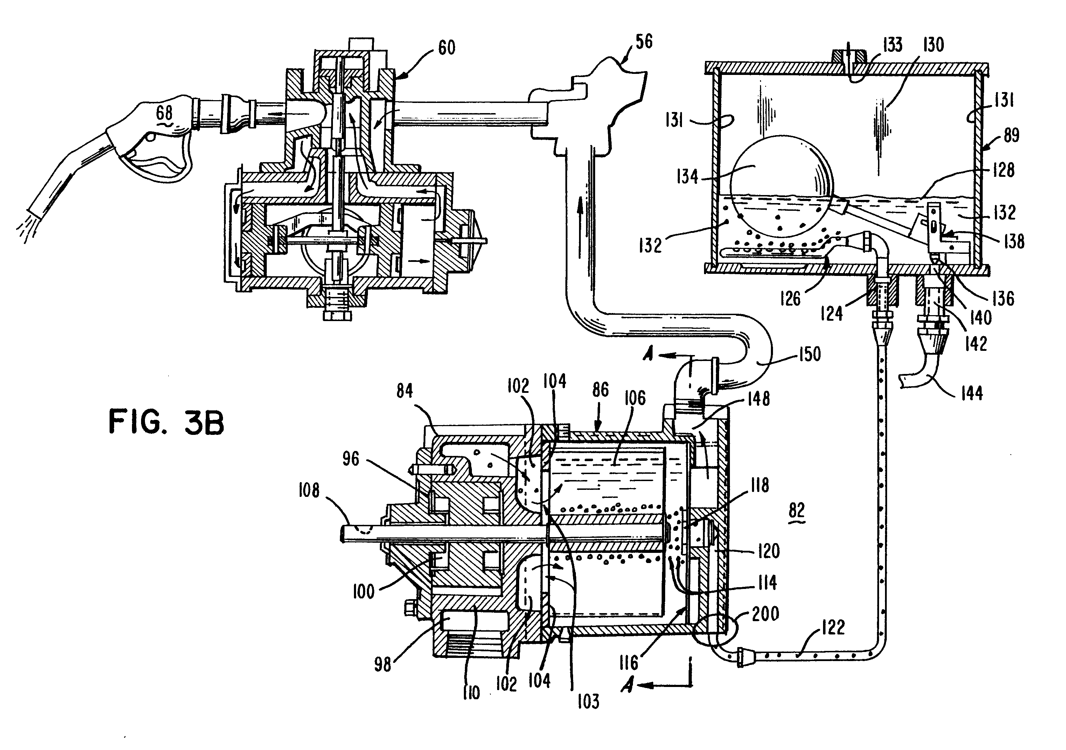

In Figs. 3A and 3B, a partial cutaway view of the fuel/air separator pumping system 82 of a preferred embodiment of the present invention is shown. For purposes of clarity, a front cutaway view of the pump 84 is shown in Fig. 3A, whereas Fig. 3B shows a side cutaway view of the pump 84, the air separator 86, and sump 89 of this preferred embodiment of the present invention (also shown are the check and pressure regulator valve 56, meter 60, and nozzle 68). The pump 84 is in the preferred embodiment a vane type pump, which is both self-priming and capable of pumping air. The pump 84 is a self-priming pump similar to the pump 17 of Figs. 2A and 2B, except that the check valve and strainer units 88 and 20, respectively, are different, as is the location of the same in the respective pump housing. The by-pass valves 90 and 28, respectively, are similar except that 90 is adjustable. A motor 92 is connected via a belt 94 to the rotor 96 of the pump 84. The rotor 96 is rotated in the direction shown by the arrow via the electric motor 92 for drawing fuel from a fuel storage tank 4 through an inlet port 98, through the check valve and strainer 88, into rotor inlet port 100, from which it is pumped by the rotor 96 into the outlet chamber 102, as shown. With reference to the side view of the pump/separator unit 82, the fuel passes from the pump through centrally located hole 103 (see arrows) of a front baffle plate 104 of the air separator 86, to the rotor chamber 106 of the air separator 86. Note that the fuel pressure is developed by vane pump 84, whereby fuel under pressure is forced through the baffle plate 104 into the lower pressure region of chamber 106 of air separator 86. The front baffle plate 104 forces the fuel (usually fuel/air mixture) to enter the rotor chamber 106 at the center of the chamber 106 about the common drive shaft 108 for both the pump rotor 96 and the air separator rotor 110 (see Fig. 4 for a view of the air separator rotor or impeller 110). Common drive shaft 108 is connected by a belt 94 and pulley (not shown) to a pulley 112 of the motor 92, whereby the motor 92 rotates both rotors 96 and 110. Rotation of the air separation rotor 110 creates a centrifugal force which causes fuel to be driven to the inner walls of the air separator chamber 106, and air 114 to be separated from the fuel and collected at the central portions of the separator chamber 106 abut the drive shaft 108. The separated air 114 moves towards a rear baffle plate 116, where the air 114 is directed via a central hole 118 in the baffle plate 116 for exiting from the air separator 86 a radial air exit port 120 into a sump feed line 122, for delivery to an input port 124 of an improved sump unit 89. Some fuel may be discharged into the sump feed line 122, whereby this mixture of air and air saturated fuel is injected into the sump chamber via a manifold 126, which sprays the fuel 128 onto the walls 131 of the sump chamber 130, for permitting the entrapped air 132 to dissipate from the fuel 128 and exit from the chamber 130 via the air vent 133. When a first predetermined level of fuel 128 is attained within the sump chamber 130, the float 134 rises to lift a first needle 136 of a two stage valve assembly 138 from its seat 140 for permitting some of the fuel 128 to flow back, via the sump outlet port 142 and sump return line 144, to inlet port 146 and into the pump inlet chamber 100 of the pump 84 for reprocessing. If, even with the needle 136 released from its seat 140 for permitting fuel 128 to return to the pump 84 from the sump chamber 130, fuel 128 continues to rise within the sump chamber 130, the float 134 will obtain a second predetermined higher level in the sump chamber 130, thereby causing a second needle 137 (see Fig. 11) to be lifted away from its seat 141 for permitting a greater flow rate of fuel 128 from the sump chamber 130 into the sump return line 144. The two stage valve assembly 138 of the sump unit 89 helps to overcome problems in the operation of the prior sump unit 34, such as fuel overflow, and the suckback of air into the pump 84 from the sump chamber 130. The operation and construction of the sump unit 89 will be described in greater detail in the following paragraphs.

Fuel substantially free of air is delivered from the air separator 86 via the air separator fuel outlet port 148 into a feed line 150 for delivery through a check valve and pressure regulator 56 to a meter 60, and therefrom to a nozzle assembly 68 for delivery to a user's fuel tank (not shown).

The combined air separator/fuel pump unit 82 is shown in detail in a pictorial exploded assembly view in Fig. 5. As shown, a lip seal 152 is secured via round head screws 154 to a pump head and bushing assembly 156. A pump rotor and shaft assembly 158 receives six pump blades 160 and two blade spacers 162 as shown and is housed with a pump body 164. A pump gasket 166 is positioned between the pump head and bushing assembly 156 and the pump body 164, whereby the pump head and bushing assembly 156 is secured to the pump body 164 via six bolts 168 and lock washers 170, and two dowel pins 172 for locating means. An inlet union 174 is coupled via a pipe nipple 176 to a threaded inlet port hole 98 - (see Figs. 3A and 3B) of the pump body 164. One end of the shaft 108 is secured via a Woodruff key 178 to the hollow shaft 180 and key way (not shown) in the air separator rotor 110 extrusion. A separator gasket 182 is installed between the air separator housing 184 and the pump body 164. A front baffle plate 104 is attached to the pump body 164 by two screws 999. The air separator housing 184 is attached to the pump body 164 via eight bolts 186 through the air gap housing and separator gasket 182 into threaded holes on the other side of the pump body 164. The rear baffle plate 116 is secured via a hollow bushing 998 to an end cap of the air separator housing 184. An air outlet fitting 198 is coupled to a threaded hole 200 of the air separator housing 184, whereby the threaded hole 200 is the remainder of the outer portion of hole 120; the remainder of the hole 120 runs radially through the air separator housing 184 to the center thereof, exiting therefrom into axial hole 121 of the protruding hub 202 of the air gap housing 184. A discharge flange 204 is secured with "O" ring 149 to the fuel discharger port 148 of the Air Separator housing 184 via four screws 205. Either a strainer 997 or strainer/check valve assay 996 is mounted in the suction side of the pump body 164. Lastly, by-pass valve unit 90 of pump 84 consists of pressure release by-pass valve 218, a release valve spring 220, an "O" ring 224, adjustment chuck 996, adjustment plug 995, and an "O" ring 994. Also, a return fitting 165 is provided for connecting the pump 84 to the sump return line 144.

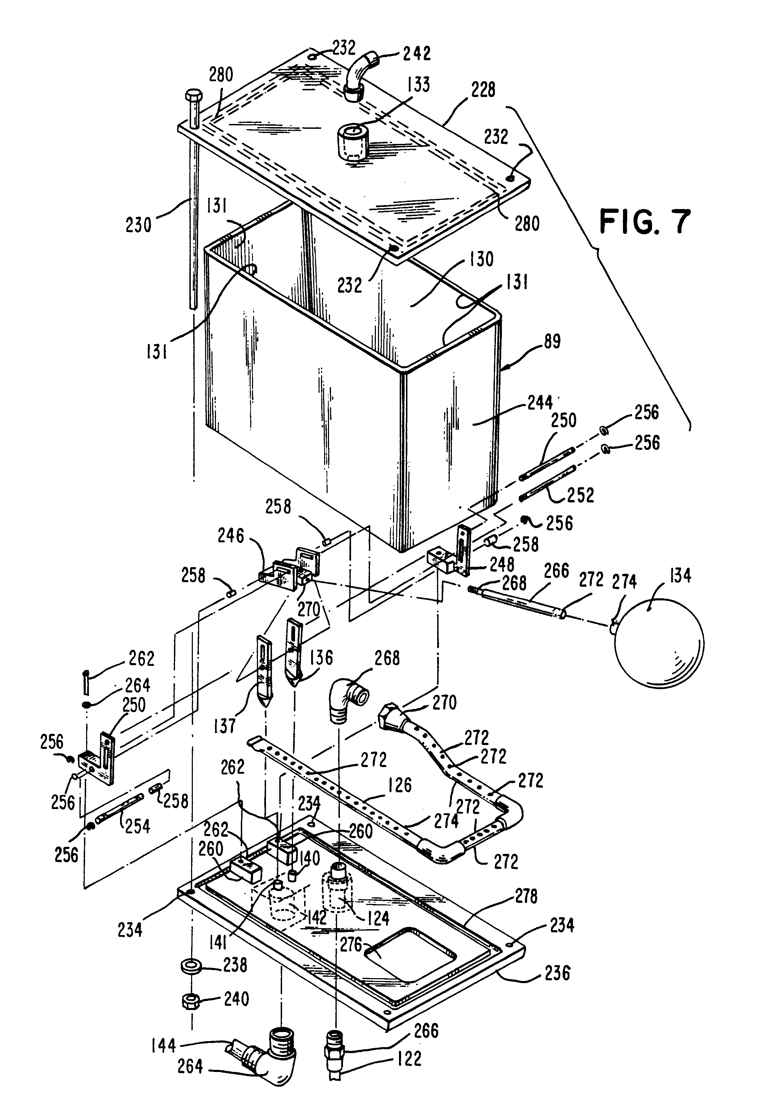

With reference to fig. 6, the layout and method and design of the curved vanes 111 of the impeller or air separator rotor 110 is shown. In the preferred arrangement, the vanes 111 are designed as follows (note that this method of design was taken from "Audel -PUMPS", by Harry L. Stewart, 2nd Edition, 1984, page 126, as published by The Bobbs-Merriel Co., Inc.):

1. Draw two concentric circles about shaft 180 as shown in phanthom.

2. Divide the inner circle into a number of arms 109 representing equidistant radii from the origin or center X (in this example, 6 arms 109 are shown).

3. Bisect each radius or arm 109 as shown at a point Y.

4. Use the bisect points Y as a center point, and use a radius YZ, for describing the curves which represent the working basis of the vanes 111.

5. The mathematical relation between X, Y and Z is indicated below in equation (1).

(1) $YZ = XY + 1/6\ XY$

With reference to Figure 7, a more detailed description of the preferred arrangement for the sump 89 will now be given. As shown in the exploded pictorial assembly diagram of Figure 7, the sump includes a sump casing weldment 244, a top plate weldment 228, providing a top cover for the sump 89 which is secured to the sump casing weldment 224 via four hexhead bolts 230 that are inserted through holes 232 of the top plate 228, and therefrom through holes 234 in a bottom plate weldment 236 providing the base of the sump 89. The bolts 230 are secured via lockwashers 238 and nuts 240, as shown. An air vent port 133 is provided on the top plate weldment 228 for receiving an air vent fitting 242, through which air is vented from the sump chamber 130. The sump casing weldment 224 is secured between the tope plate weldment 228 and the bottom plate weldment 236, as shown. A two stage valve assembly 138 (see Fig. 3B) includes a first needle or first stage plunger 136, a second needle or second stage plunger 137, a valve guide 246, a right-hand valve guide support 248, a left-hand valve guide support 250, first through third valve shafts 250, 252, and 254, respectively, retaining rings 256 for retaining the valve shafts 250, 252, and 254, Oilite bearings 258 for receiving the aforesaid valve shafts, retaining blocks 260 each having a threaded hole 262 for rigidly securing the right hand and left hand valve guide supports 248 and 250 to the bottom plate weldment 236 via machine screws 262 and lock washers 264, a valve lever 266 having a threaded end 268 secured to a threaded hole 270 of valve guide 246, and another threaded end 272 secured to a threaded bushing 274 of float 134, a seat 141 for receiving the second needle or second stage plunger 137, the components being assembled together as shown. An outlet fitting 264 is secured to the outlet port 142, and an inlet fitting 266 is secured to the inlet port 124. A flared tube inlet fitting 268 is secured at one end to the interior portion of the inlet port 124, and at its other end to the inlet manifold 126 via the coupling nut fitting 270. Note that the inlet manifold 126 is fabricated from tubing of appropriate materials such as copper, wherein a series of spray holes or jet holes 272 are provided as shown (more or less holes may be provided depending upon the application). Also, the holes or jets 272 are oriented at an angle about the tubing 274 of the inlet manifold 126 for spraying fuel directly onto the inner walls 131 of the sump casing weldment 244. A recessed area 276 is provided in the bottom plate weldment 236 for allowing increased travel for the float 134 while minimizing the height of the sump casing weldment 244. A groove 278 is provided in the bottom plate weldment 236 for both receiving and locating the bottom edge of the subcasing weldment 244 on the bottom plate weldment 236. Similarly, a groove 280 is provided on the inside surface of the top plate weldment 228 for both receiving and locating top edge of the sump casing weldment 244 (note that the groove 280 is of course shown in the phanthom due to its location on the bottom face of the top plate weldment 228). Sealing means such as silicon rubber, an O-ring seal, or other appropriate gasket type material is used to provide a liquid tight seal between the top plate weldment 280, bottom plate weldment 236, and sump casing 244 (note that the gasket material may be included in the groove 278 of the bottom plate 236, and groove 280 of the top plate 228). In this example, the gasket material must be impervious to gasoline.

With further reference to Figure 7, in this example, the inlet tube manifold 126 was fabricated with 31 holes turned 45° upward from the horizontal in order to broadly distribute the air/fuel mixture delivered to the manifold 126 from the air separator 86. As previously mentioned, fuel is sprayed from the holes 272 of manifold 126 onto the walls 131 of the sump casing 244. Relative to the prior sump 34 shown in Figure 2A, the present preferred sump 89 can be used both with standard and high flow rate fuel distribution units, and provides an increased liquid surface area for completing the extraction of air from the fuel (the prior sump 34 provided an 8.4 square inch liquid surface area, whereas the present improved sump 89 provides a 23.5 square inch liquid surface area), provides an increased flow rate of fuel through the sump 89, and includes a two-stage valving mechanism 138 for preventing the overflow of fuel from the sump 89. Also, the float 134 of the present sump 89 is mounted on moment arm 266 for reducing the size of the required float relative to the prior sump 34, and increasing the liquid surface area. The two-stage valve mechanism 138 is also designed to increase the fluid flow and reduce the fuel pressure opening force (relative to a single-stage valve mechanism) to more readily permit fuel to flow back to the pump 84 from the sump 89.

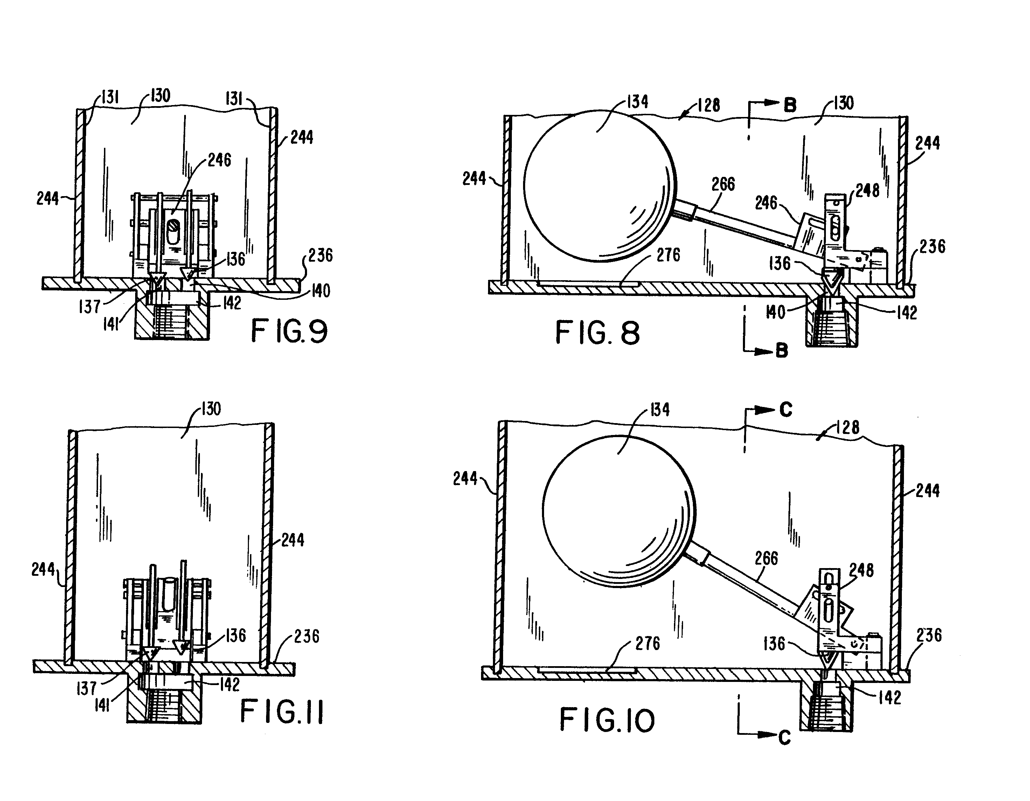

Figures 8 through 11 illustrate the operation of a two-stage valve assembly 138. In Figure 8, a sufficient amount of volume of fuel has entered the sump 89 to raise the float 134 upward to a position where the first stage plunger 136 is raised from its seat 140, for permitting fuel to begin flowing back from the sump 89 to the pump 84. Figure 9 is a sectional view taken along B-B showing operation of the first stage of the two-stage valve mechanism 138. If additional fuel enters the sump chamber 130, the float 134 will raise to an even higher position than in Figure 8, causing the second stage plunger 137 to be lifted from its seat 141, as shown in Figure 11. Such action permits additional fuel (a maximum rate of flow) to flow from the sump 89 back to the pump 84, thereby preventing overflow of the fuel from the sump 89. However, in many applications, the prior sump 34 shown in Figure 2A may be adequate when used in combination with the air separator 82, for meeting the air/fuel ratio standards of the country or state where the fuel distribution system is to be used. Clearly, the prior sump 34 is much simpler in design, and therefore more economical than the sump 89 of the preferred embodiment of the invention. Contrarywise, in countries such as Australia, as previously mentioned, it may be necessary to use the preferred sump 89 in order to meet the very stringent Australian air/fuel standards.

## Claims

1. Apparatus for both pumping liquid fuel and removing air from the fuel, comprising a pump - (84) for pumping the fuel, the pump having a drive shaft (108) and a rotor (96) rigidly mounted thereon, and an air separator (86) for removing air from the fuel delivered by the pump, characterised in that the air separator comprises a centrifuge having a centrifuge chamber (106) and an impeller (110) therein rigidly mounted upon an extension of the pump drive shaft for centrifuging the fuel delivered by the pump so that it separates into fuel substantially free of air in a first region of said centrifuge chamber radially remote from said shaft extension and air-containing fuel in a second region of said centrifuge chamber radially adjacent to said shaft extension, said centrifuge further comprising respective outlet means (148,120) in liquid communication with the substantially air-free fuel and the air-containing fuel in said first and second regions, respectively.

2. Apparatus as claimed in claim 1, whereby said pump (84) is a vane pump comprising an inlet port (100) and an outlet chamber (102), said drive shaft (108) extending outward from said outlet chamber, and said centrifuge (86) comprises a front baffle plate (104) rigidly connected to said vane pump body (164) and covering said outlet chamber (102), said drive shaft (108) extending through a centrally located hole in said front baffle plate, a centrifuge chamber casing (184) mounted rigidly on the pump body and enclosing said impeller (110), a fuel outlet port (148) located on the side of said casing rearward from said front baffle plate, and a rear baffle plate (116) rigidly connected to an end cap of said casing (184) between said end cap and said impeller (110), said rear baffle plate having a centrally located hole (118) therein positioned opposite the end of said drive shaft (108) and concentric with a centrally located vent hole in said end cap, said fuel outlet port (148) and said centrally located vent hole in said end cap constituting said respective outlet means (148,120) in liquid communication with the substantially air-free fuel and the air-containing fuel in said first and second regions, respectively, rotation of said drive shaft causing said vane pump to suck in fuel from said inlet port (100) for delivery to said outlet chamber - (102) under relatively high pressure, said fuel being forced through the hole in the front baffle plate - (100) of said centrifuge (85), whereby the fuel enters a relatively low pressure region within said centrifuge chamber casing (184) in a direction parallel with and adjacent to the longitudinal axis of said impeller (110), said rotating impeller causing air to be separated from the fuel, the air being forced rearward along a central axial portion of said impeller for exiting into the hole (118) in said rear baffle plate (116) for entry into and venting from said centrally located vent hole is said end cap, the fuel substantially free of said air being forced against an inside wall of said centrifuge chamber casing for delivery to said liquid outlet port (148).

3. An apparatus as claimed in claim 2, further comprising a sump (89) connected to said vent hole of said end cap of said centrifuge for receiving both air and residual fuel saturated with air from said centrifuge, for completing the removal of air from said fuel by permitting the air to "bubble up" and out of the residual fuel.

4. An apparatus as claimed in claim 3, wherein said sump (89) includes:
a casing (130) consisting of side walls (131), a top, and a bottom; and
a manifold (126) located with said sump casing for receiving the air and residual fuel from said centrifuge (86), and spraying the liquid onto the walls - (131) of said sump casing, thereby providing a greater surface area of fuel for enhancing the dissipation of air from the residual fuel.

5. An apparatus as claimed in claim 3 or 4, wherein said sump (89) includes:
a valve assembly (138) for detecting a predetermined level of fuel within said sump, said valve assembly being arranged for permitting fuel to flow back from said sump (89) to another inlet port - (146) of said vane pump (84) until the level of fuel is below said predetermined level, for reprocessing the returned fuel in said centrifuge (86), thereby both preventing overflow of fuel from said sump and permitting the reprocessing of excess fuel in said centrifuge.

6. An apparatus as claimed in claim 3 or 4, wherein said sump (89) includes:
a two-stage valve assembly (138) for detecting said fuel exceeding a first or second successively higher predetermined levels of fuel in said sump, for permitting the fuel to drain back at a first flow rate to another inlet port (146) of said vane pump (84), when the fuel is above said first and below said second predetermined levels, and to drain back at a second flow rate higher than the first flow rate whenever the fuel level is above said second predetermined level, thereby preventing overflow of said sump (89).

7. An apparatus as claimed in claim 6, wherein said two-stage valve assembly (138) further includes:
a single float (134) for rising with rising fuel in said sump (89), (a) for lifting a first plunger (136) of said valve assembly (138) from a first seat (140) located on the bottom of said sump casing (130) whenever the fuel exceeds said first predetermined level but is below said second predetermined level, permitting fuel to flow at a first rate to said vane pump, and (b) for also lifting a second plunger (137) of said valve assembly (138) from a second seat - (141) located on the bottom of said sump casing, whenever the fuel exceeds said second predetermined level, for permitting a second rate of flow greater than said first rate of flow of fuel back to said vane pump (84) for the period of time the fuel in said sump (89) is above said second predetermined level.

8. Apparatus as claimed in claim 2 or any one of claims 3 to 7 as appended to claim 2, wherein said pump is a self-priming vane pump, said outlet chamber (102) is concentric with and about said drive shaft (108), the latter protruding therefrom, said impeller (110) has curved blades, and said end cap of' said centrifuge casing (184) has a protruding centrally located hub on its inside face having said centrally located air vent hole in said hub end cap therein, that air vent hole leading into a radial air exit port (120) through said end cap.

9. A method of separating air from liquid fuel, comprising the steps of pumping the fuel in a pump to deliver the fuel under increased pressure and separating air from the delivered fuel, characterised in that the air separation is effected by centrifuging the delivered fuel in a centrifuge chamber so that the delivered fuel separates into fuel substantially free of air in a first region of the centrifuge chamber radially remote from the axis of centrifugation and air-containing fuel in a second region of said centrifuge chamber radially adjacent to said axis of centrifugation, and by separating discharging substantially air-free fuel and air-conditioning fuel from said first and second regions, respectively.

10. A method as claimed in claim 9, wherein said delivered fuel is delivered at a relatively high pressure into a relatively low pressure central area of the centrifuge chamber in parallel with the axis of centrifugation.

# FIG. 1
### PRIOR ART

14 SUMP

4 FUEL STORAGE TANK → 2 FUEL PUMP → 6 FUEL/AIR SEPARATOR → 8 CHECK AND PRESSURE REGULATOR VALVE → 10 METER

12 NOZZLE

# FIG. 6
### PRIOR ART

0 226 405

**FIG. 2A**

PRIOR ART

FIG. 2B
PRIOR ART

## FIG. 3A

## FIG. 4

FIG. 3B

FIG. 5

149 148 205 204 184 116 186 200 198 998 110 182 999 104 164 84 178 160 158 162 166 156 170 168 154 165 108 162 996 224 995 996 218 220 108 176 997 174 172 152 214 216 996

0 226 405

FIG. 7

FIG.9

FIG. 8

FIG.11

FIG.IO